# EUROPEAN PATENT SPECIFICATION

(11) **EP 1 092 619 B1**
(45) Date of publication and mention of the grant of the patent: **01.10.2003**
(21) Application number: 00120946.9
(22) Date of filing: 26.09.2000
(51) Int. Cl.: B62M 23/02

(54) **Motor-driven assist unit**
Hilfsantriebseinheit
Unité à assistance motorisée

(30) Priority: 13.10.1999 JP 29077799
(43) Date of publication of application: 18.04.2001
(73) Proprietor: HONDA GIKEN KOGYO KABUSHIKI KAISHA, Minato-ku Tokyo (JP)
(72) Inventor: Yahagi, Kunio, K.K. Honda Gijutsu Kenkyusho, Wako-shi, Saitama (JP); Igarashi, Masashi, K.K. Honda Gijutsu Kenkyusho, Wako-shi, Saitama (JP)
(74) Representative: Liska, Horst, Dr.-Ing.

(56) References cited:
- EP-A- 0 736 449
- EP-A- 0 802 109
- US-A- 4 140 195
- PATENT ABSTRACTS OF JAPAN vol. 1996, no. 11, 29 November 1996 (1996-11-29) & JP 08 175471 A (YAMAHA MOTOR CO LTD), 9 July 1996 (1996-07-09)
- PATENT ABSTRACTS OF JAPAN vol. 1997, no. 05, 30 May 1997 (1997-05-30) & JP 09 002367 A (YAMAHA MOTOR CO LTD), 7 January 1997 (1997-01-07)

## Description

The present invention relates to a leg-power detecting mechanism of a motor-driven assist unit for detecting a leg-power applied to pedals of a bicycle and electrically generating an assist-power in response to the detected leg-power, and particularly to a motor-driven assist unit capable of conforming the rotational direction of a crank shaft to that of an output shaft with an inexpensive structure.

In a motor-assisted bicycle including a drive system using a leg-power and a drive system using a power of an electric motor, that is, a so-called assist-bicycle, a drive torque of the electric motor is controlled by increasing/decreasing the amount of a drive current to be supplied from a battery to the electric motor on the basis of a leg-power applied to pedals or a vehicular speed.

In a motor-driven assist unit, a resultant power of a leg-power manually applied to pedals and an assist-power outputted from an electric motor is transmitted to an output shaft connected to a drive wheel (rear wheel) via a chain. Here, since the rotational direction of a crank shaft must conform to that of the output shaft, it is essential to provide a third shaft for conforming the rotational direction of the crank shaft to that of the output shaft, between the crank shaft and the output shaft.

For example, Japanese Patent Laid-open No. Hei 8-175471 has disclosed a mechanism that, to conform the rotational direction of a crank shaft to that of an output shaft and also to acceleratedly transmit the rotation of the crank shaft to the output shaft, an acceleration gear with internal teeth is provided coaxially with the crank shaft and the internal teeth of the acceleration gear are meshed with external teeth of the output shaft.

The above-described prior art, however, has a problem that since the acceleration gear with internal teeth, which is expensive, must be used for conforming the rotational direction of the crank shaft to that of the output shaft, it is difficult to achieve the cost-reduction of the mechanism.

An object of the present invention is to solve the above-described problem of the prior art and to provide a motor-driven assist unit capable of conforming the rotational direction of a crank shaft to that of an output shaft with an inexpensive structure and also of accurately detecting a leg-power inputted to the crank shaft.

To achieve the above object, according to the present invention, there is provided a motor-driven assist unit containing an electric motor for generating an assist-power in response to a leg-power inputted to a crank shaft, wherein the assist-power and the leg-power are synthesized and the resultant power iS transmitted to a drive wheel, characterized in that the motor-driven assist unit includes: a large-diameter gear provided on the crank shaft; an output shaft connected to the drive wheel; an idle shaft disposed between the crank shaft and the output shaft in such a manner as to be in parallel thereto, the idle shaft including a small-diameter gear meshed with the large-diameter gear of the crank shaft and a second gear meshed with the output shaft; and a leg-power detecting mechanism, provided on the idle shaft, for detecting a leg-power inputted to the crank shaft.

With this configuration, since the idle shaft is reversely rotated with respect to the crank shaft and the output shaft meshed with the idle shaft is reversely rotated with respect to the idle shaft, that is, normally rotated with respect to the crank shaft, it is possible to conform the rotational direction of the crank shaft to that of the output shaft without use of an expensive acceleration gear with internal teeth. Further, since the crank shaft can be separated from the output shaft, it is possible to increase the degree of freedom in selection of the drive sprocket connected to the output shaft.

If an assist-power generated by the electric motor is transmitted to the output shaft via the idle shaft, it is possible to obtain a large reduction ratio via the idle shaft and hence to obtain a large assist-power (torque).

If an assist-power generated by the electric motor is transmitted to the output shaft not by way of the idle shaft, it is possible to reduce the number of gears provided on the idle shaft and hence to increase the degree of freedom in design of the leg-power detecting mechanism on the idle shaft.

If the output shaft is disposed at a higher position, it is possible to locate a chain line at a higher position and hence to suppress the interference of a road surface with the chain, and further, since the electric motor is disposed at a lower position, it is possible to lower the center of gravity of the vehicle.

Hereinafter, the present invention will be described in detail with reference to the drawings.
Fig. 1 is a side view of a motor-assisted bicycle to which a motor-driven assist unit of the present invention is applied;
Fig. 2 is a right side view showing an essential portion of the bicycle shown in Fig. 1.
Fig. 3 is an enlarged view of an essential portion shown in Fig. 1.
Fig. 4 is a side view of a first embodiment of the motor-driven assist unit of the present invention, with parts partially cutaway.
Fig. 5 is a sectional view, taken on line A-A of Fig. 2, showing gear trains.
Fig. 6 is a sectional view, taken on line B-B of Fig. 2, showing gear trains.
Fig. 7 is a side view of a second embodiment of the motor-driven assist unit of the present invention, with parts partially cutaway.
Fig. 8 is a sectional view, taken on line A-A of Fig. 7, showing gear trains.
Fig. 9 is a sectional view, taken on line B-B of Fig. 7, showing gear trains.
Figs. 10a to 10c are views illustrating the function of a first idle shaft.

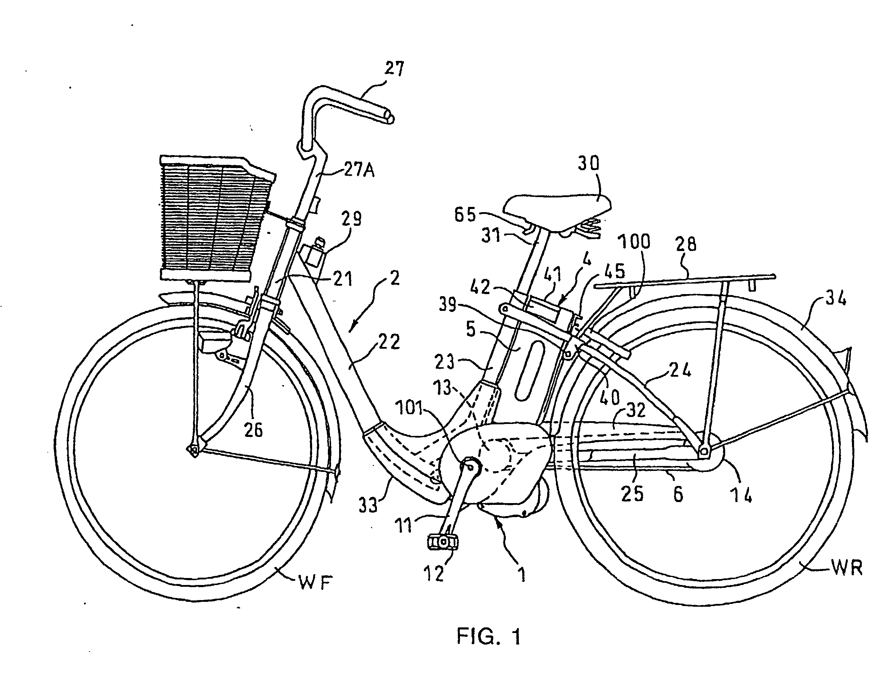

Referring to Fig. 1, a body frame 2 of a motor-assisted bicycle according to the present invention includes a head pipe 21 positioned on the front side of a body of the bicycle; a down pipe (main frame) 22 extending rearwardly, downwardly from the head pipe 21 and being at its lower portion curved in a downwardly projecting shape; and a seat post 23 raised upwardly, rearwardly from a portion, near the lower end, of the down pipe 22.

The seat post 23 is integrally connected to the down pipe 22, and accordingly, the body frame 2 is formed into a U-shape projecting downwardly as a whole. Since the seat post 23 extends upwardly, rearwardly from the connection portion with the down pipe 22 and the down pipe 22 extends forwardly, upwardly from the connection portion with the seat post 23, a gap between the seat post 23 and the down pipe 22 becomes larger toward the upper side from the connection portion therebetween. As a result, when getting on and off the bicycle, a rider is easy to stride across the U-shaped body frame 2.

The connection portion between the down pipe 22 and the seat post 23 and its neighborhood are covered with a resin cover 33. The resin cover 33, which is divided into upper and lower parts, is removably mounted. A handle post 27A is turnably inserted in the head pipe 21. A handlebar 27 is connected to an upper end of the handle post 27A, and a front fork 26 is connected to a lower end of the handle post 27A. The front fork 26 connected to the handle post 27A is steerable by the handlebar 27. A front wheel WF is rotatably supported by lower ends of the front fork 26.

A motor-driven assist unit 1 including an electric motor for assisting a leg-power is provided on a lower portion of the body frame 2. A power supply switch 29 for the motor-driven assist unit 1 is provided on a portion, near the head pipe 21, of the down pipe 22. It should be noted that the power supply switch 29 may be provided on the handlebar 27 in front of the handle post 27A.

A crank shaft 101 is rotatably supported by the motor-driven assist unit 1, and pedals 12 are rotatably supported via cranks 11 by right and left ends of the crank shaft 101. A pair of right and left rear lower arms 25 extend rearwardly from the motor-driven assist unit 1, and a rear wheel WR as a drive wheel is rotatably supported between rear ends of the rear lower arms 25. A pair of right and left rear upper arms 24 are provided between an upper portion of the seat post 23 and lower ends of the rear lower arms 25. A seat pipe 31, on an upper end of which a seat 30 is provided, is slidably inserted in the seat post 23, so that the vertical position of the seat 30 can be adjusted by sliding the seat pipe 31 in the seat post 23.

A battery housing case 5 (hereinafter, referred to as "housing case") for housing a battery 4 is mounted on the back side of the seat post 23 at a position under the seat 30. The battery 4, which contains a plurality of battery cells each having a size allowed to be housed in a battery case formed into an approximately rectangular parallelopiped shape, is disposed along the seat post 23 with its longitudinal direction taken nearly in the vertical direction.

A handle 41 with its grip portion positioned on the right side of the vehicular body is mounted on an end portion (upper end in Fig. 1) of the battery 4 in the longitudinal direction. The handle 41 is turnably supported by the battery 4, and is normally withdrawn in a recess provided at a corner of the battery 4. Since a rider generally stands on the left side of the vehicular body, the grip portion of the handle 41 is positioned on the right side of the vehicular body with its rotational shaft (not shown) disposed at a central portion of the vehicular body. With this arrangement, it is easy for the rider to raise the handle 41. Further, to allow the rider to easily check the residual power of the battery 4 from the riding position, a battery residue meter 42 is provided at a position, offset leftwardly from the seat 30, of the battery 4.

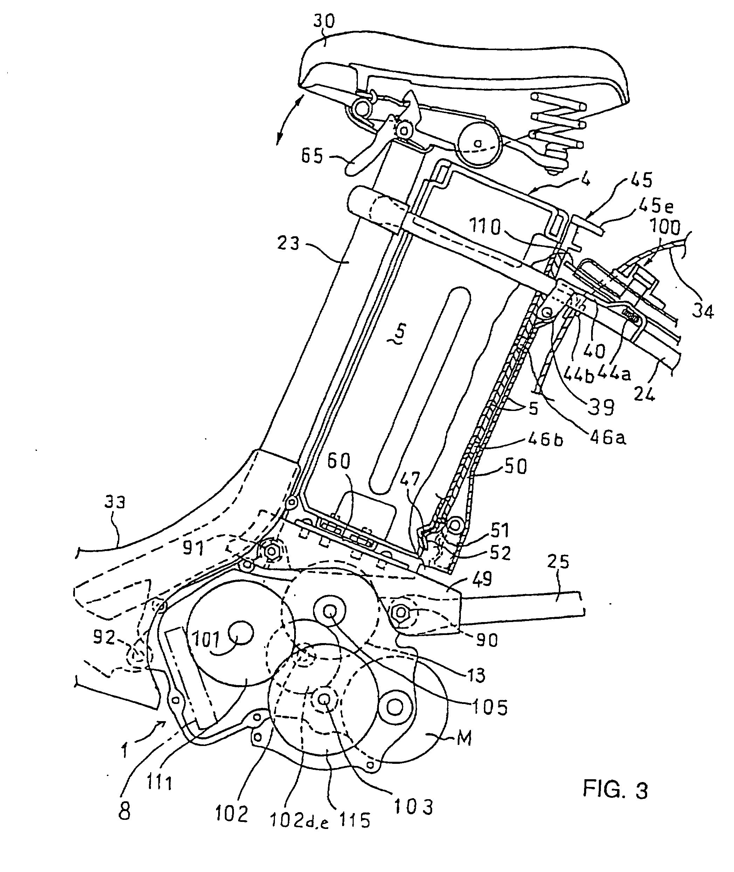

Referring to Fig. 3, an operating lever 45 for locking/unlocking the battery 4 and a wheel lock device 100 are disposed behind the battery 4. The operating lever 45 is inserted in a side chamber 50 provided behind the battery housing case. The side chamber 50 has a size longer in the vertical direction and an approximately rectangular shape. An engagement hook 52, which is biased clockwise on a right side view by a torsion spring 51, is provided in a lower portion of the side chamber 50. When the battery 4 is inserted in the housing case 5, the engagement hook 52 is engaged in a recess 47 provided in a lower portion of the battery 4, whereby the battery 4 is fixed in the housing case 5. The recess 47 is formed into an approximately V-shape. Since the lower portion of the battery 4 is fixed by the engagement hook 52, the housing state of the battery 4 is stably kept. That is to say, even if the vehicular body is vibrated, the battery 4 is not moved in both the vertical direction and lateral direction.

The seat 30 provided on the upper portion of the seat post 23 can be turned forwardly, by the unlocking operation of a lever 65, up to a position at which the seat 30 does not interfere with the withdrawal of the battery 4. However, in the state in which the engagement hook 52 is engaged in the recess 47, even if the seat 30 is turned forwardly, the battery 4 cannot be withdrawn upwardly.

The operating lever 45 is usually biased upwardly by a spring (not shown) suspended between the operating lever 45 and a wall of the side chamber 50. In the case of mounting the charged battery 4 to the bicycle, the seat 30 is turned forwardly, and the battery 4 is inserted from above into the housing case 5. When the battery 4 is almost inserted in the housing case 5, the lower end of the battery 4 is brought into contact with a side portion of the engagement hook 52 to push the engagement hook 52 counterclockwise. Then, when the battery 4 is further inserted in the housing case 5, the engagement hook 52 is elastically engaged in the V-shaped recess 47 formed in the battery 4, whereby the battery 4 is fixed in the housing case 5. At the same time, plus (+) and minus (-) output terminals (discharge contacts) provided on the bottom of the battery 4 are electrically, mechanically connected to a contact unit 60 screwed in a battery bracket 49 fixed, typically by welding, to the seat post 23. This connection is stable because of the dead weight of the battery 4 and the pressing by the engagement hook 52.

In the case of removing the battery 4, the operating lever 45 is depressed so that the engagement hook 52 is pushed down by the tip of the operating lever 45. The engagement hook 52 thus pushed down by the tip of the operating lever 45 is turned counterclockwise in the figure against the biasing force of the spring 51. As a result, the engagement hook 52 is escaped from the recess 47. In this way, the engagement of the engagement hook 52 in the recess 47 is released. After the engagement of the engagement hook 52 in the recess 47 is released, the battery 4 can be withdrawn upwardly. The handle 41 can be used for withdrawal of the battery 4.

An upper portion of the battery housing case 5 is fixed, by means of a screw 39, to a bracket 40 fixed, typically by welding, to the rear upper arm 24. The wheel lock device 100 and the rear fender 34 are also fixed to the bracket 40 by means of screws 44a and 44b, respectively.

A front end of the battery bracket 49 is welded to the seat post 23, and a rear end of the battery bracket 49 is bolted to both a front end of the rear lower arm 25 and a hanger portion 90 of the motor-driven assist unit 1. The motor-driven assist unit 1 has two hanger portions 91 and 92, in addition to the above hanger portion 90. These hanger portions 92, 91 and 90 of the motor-driven assist unit 1 are bolted to a rear end of the down pipe 22, a portion near the front end of the battery bracket 49, and the rear lower arm 25 near the rear end of the battery bracket 49, respectively. In this way, the motor-driven assist unit 1 is fixedly suspended from the body frame 2. It should be noted that since the hanger portion 92 is located under the crank shaft 101 of the motor-driven assist unit 1, the bottom, that is, the lowermost end of the U-shaped body frame 2 can be located under the crank shaft 101.

Since the bottom of the U-shaped body frame 2 is located at the low level as described above, it is possible to improve the ease of the rider's striding motion across the body frame 2. Further, since the motor-driven assist unit 1 is supported at its low level hanger portion 92 by the lower end of the down pipe 22, that is, disposed at a lower level as a whole, it is possible to lower the center of gravity of the motor-driven assist unit 1.

The motor-driven assist unit 1 contains the crank shaft 101, a first idle shaft 102, a second idle shaft 103, an output shaft 105 to which the drive sprocket 13 is connected, and gears 111, 102d, 102e, and 115 for transmitting a power between the shafts 101, 102, 103, and 105. The electric motor M having a rotational shaft 104 disposed in parallel to the crank shaft 101 is mounted to the motor-driven assist unit 1. The reason why the rotational shaft 104 of the electric motor M is in parallel to the crank shaft 101 is to reduce a portion, projecting rearwardly from the motor-driven assist unit 1, of the electric motor M. This makes it possible to reduce a gap between the crank shaft 101 and the rear wheel WR and hence to avoid the wheel base from becoming longer.

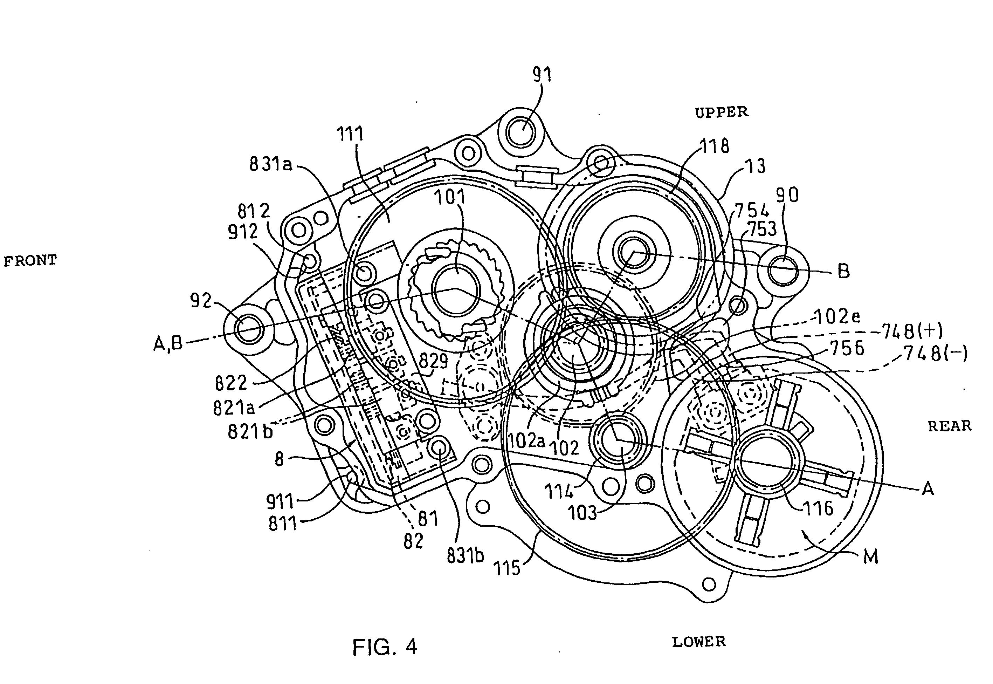

A leg-power inputted from the crank shaft 101 is acceleratedly transmitted to the first idle shaft 102 and is transmitted from the first idle shaft 102 to the output shaft 105, to rotate the drive sprocket 13. The rotation of the drive sprocket 13 is transmitted to a wheel sprocket 14 of the rear wheel WR (see Fig. 1) via a chain 6. The structure of the motor-driven assist unit 1 will be described in more detail with reference to Figs. 4, 5 and 6.

The battery 4 mounted on the battery bracket 49 located behind the seat post 23 supplies a power to the motor M, and the motor M generates an assist-power responding to a leg-power detected by a leg-power detecting mechanism (to be described later) provided on the first idle shaft 102. The rotation of the motor M is transmitted to the first idle shaft 102 via the second idle shaft 103, and is synthesized with an man-power (leg-power) on the first idle shaft 102. The resultant power is then transmitted to the output shaft 105.

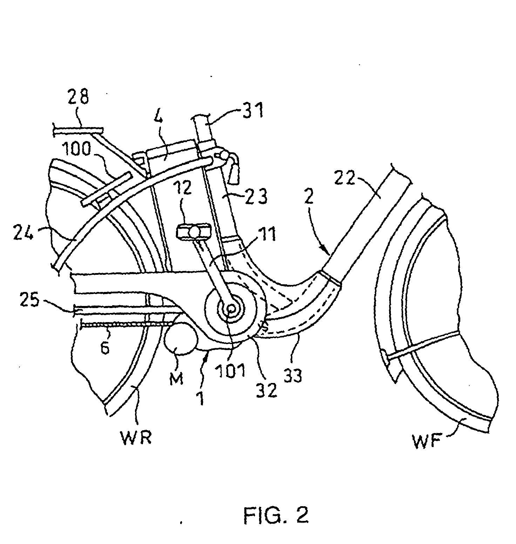

As shown in Figs. 1 and 2, the whole of the drive sprocket 13 and an upper half of the chain 6 are covered with a chain cover 32. Since in this bicycle the drive sprocket 13 is not concentric with the crank shaft 101, it is not essential that the chain cover 32 has a circular-arc portion centered on the crank shaft 101; however, to obtain a good external appearance, prevent the catch of the rider's leg, protect the motor-driven assist unit 1, and ensure a conventional familiar image of a bicycle, the chain cover 32 is extended in a circular shape centered on the crank shaft 101 up to a position to cover the whole of the drive sprocket 13.

A first embodiment of the motor-driven assist unit 1 is shown in Figs. 4 to 6. In these figures, parts being the same as or similar to those described above are designated by the same characters.

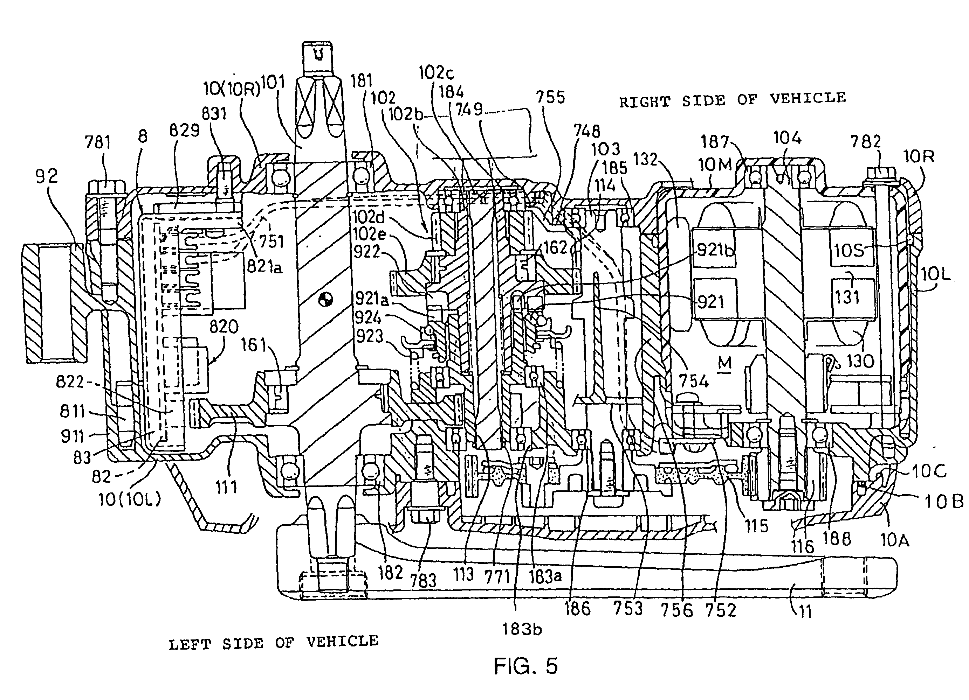

Referring to Figs. 4 and 5, a case 10 of the motor-driven assist unit 1 is formed by connecting a left half (left case) 10L and a right half (right case) 10R, each of which is made from aluminum, to each other by means of a plurality of bolts 781.

According to this embodiment, since each of the hanger portions 90, 91 and 92 has no parting plane, the left and right cases 10L and 10R can be separated from each other by removing the bolts 781 while the motor-driven assist unit 1 is left mounted on the body frame 2. To be more specific, since the hanger portions 90, 91 and 92 are provided only on the left case 10L, the right case 10R can be removed while the left case 10L is left mounted on the body frame 2. As a result, it is possible to easily perform the maintenance of a control unit 8 and the motor M contained in the case 10 of the motor-driven assist unit 1. In addition, to perform the maintenance of a portion, on the left case 10L side, of the motor M and its drive system, the inside of the motor-driven assist unit 1 may be exposed by removing a resin cover 10A to be described later.

The crank shaft 101 as a leg-power input shaft is rotatably supported by the case 10 via bearings 181 and 182. A large-diameter acceleration gear 111 is rotatably supported on the crank shaft 101 via a one-way clutch 161, and accordingly, even if the crank shaft 101 is reversely rotated, the acceleration gear 111 is not reversely rotated. The first idle shaft 102 for matching the rotational direction of the crank shaft 101 with the rotational direction of the drive sprocket 13 is rotatably supported by the case 10 at a position offset rearwardly, downwardly from the crank shaft 101. In this embodiment, the first idle shaft 102 includes the leg-power (torque) detecting mechanism.

The first idle shaft 102 includes hollow-shaped first and second drive shafts 102a and 102b, which are separated from each other on the left and right sides and coaxially disposed in the transverse direction; a torsion bar 102c passing through the drive shafts 102a and 102b, with both ends thereof spline-connected to the left end of the first drive shaft 102a and the right end of the second drive shaft 102b; and a spring 102S for elastically biasing the first and second drive shafts 102a and 102b to each other in the axial direction. A small-diameter gear teeth portion 113 formed on an small-diameter portion of the outer periphery of the first drive shaft 102a is meshed with the acceleration gear 111 of the crank shaft 101. The first drive shaft 102a is rotatably supported by the left case 10L via bearings 183a and 183b, and the second drive shaft 102b is rotatably supported by the right case 10R via a bearing 184.

With this configuration, since a leg-power inputted to the crank shaft 101 is accelerated by the acceleration gear 111 and the gear teeth portion 113, the torque of the leg-power is reduced, with a result that a torque applied to the torsion bar 102c is reduced. This makes it possible to miniaturize the torsion bar 102c, and hence to make compact the leg-power detecting mechanism as a whole.

In this embodiment, to easily handle the first idle shaft 102 as a single body by sub-assembling the two drive shafts 102a and 102b, and the torsion bar 102c into the first idle shaft 102, a clip 771 is fitted at the left end of the torsion bar 102c for preventing the falling of the drive shafts 102a and 102b and components associated therewith from the torsion bar 102c in a state in which the first idle shaft 102 is not rotatably supported by the case 10. To be more specific, the second drive shaft 102b is fixedly pressed in a right end portion of the torsion bar 102c, and the first drive shaft 102a is removably inserted on the left end portion of the torsion bar 102c and held thereon by the clip 771.

A first gear 102d is fixed to a small-diameter portion of the outer periphery of the second drive shaft 102b, and a second gear 102e is connected to a large-diameter portion of the outer periphery of the second drive shaft 102b via a one-way ratchet 162. Accordingly, when the bicycle runs by a man-power in a state in which the motor M is stopped, the gear 102e and components disposed on the motor M side from the gear 102e are not rotated.

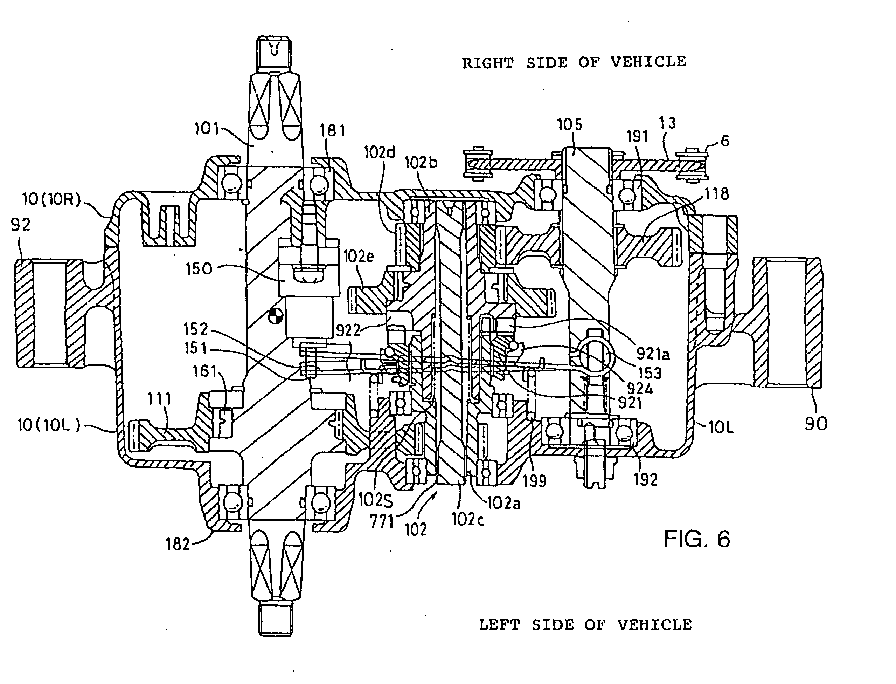

A slider 921 having at its end surface two projecting cam portions 921a is spline-connected to a large-diameter portion of the outer periphery of the first drive shaft 102a in such a manner as to be slidable in the axial direction. A ball cup 924 is engaged with a displacement detecting lever 152 (see Fig. 6) and is usually biased to the second drive shaft 102b side by a coil spring 923. The ball cup 924 usually pushes the slider 921 to the second drive shaft 102b while absorbing the rotation of the slider 921.

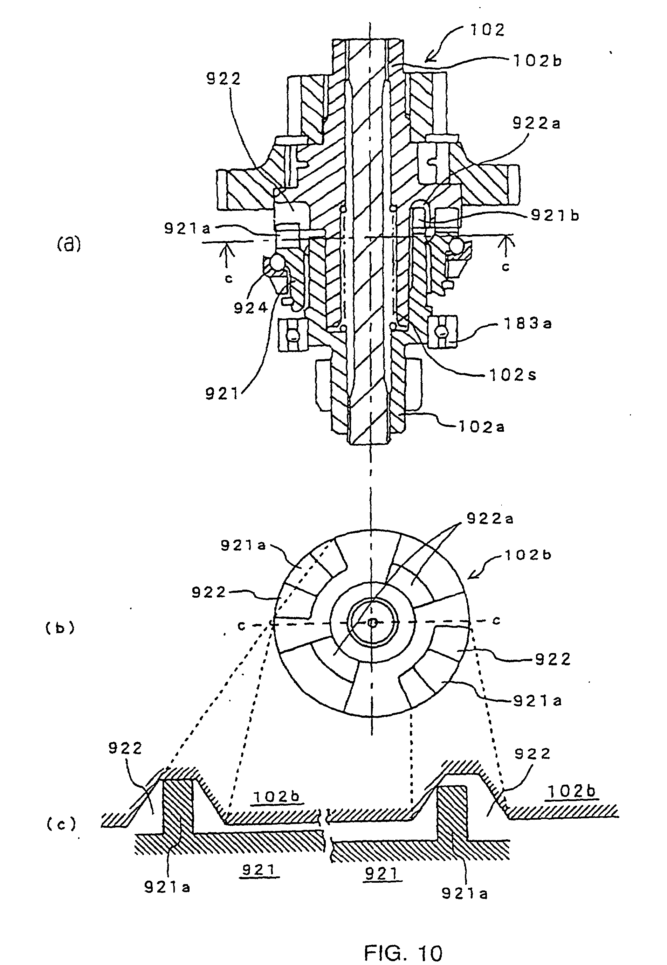

Figs. 10(a) to 10(c) are views illustrating the function of the second drive shaft 102b, wherein Fig. 10(a) is a sectional view; Fig. 10(b) is a sectional view taken on line C-C of Fig. 10(a); and Fig. 10(c) is a schematic view with the side surfaces of the end portion of the second drive shaft and the slider linearly depicted. In these figures, parts being the same as or similar to those described above are designated by the same characters.

In this embodiment, two recessed can grooves 922 extending in the circumferential direction, which are to be engaged with the two projecting cam portions 921a provided on the end surface, opposed to the second drive shaft 102b, of the slider 921, are formed in an end surface, opposed to the slider 921, of the second drive shaft 102b.

When a torsion (differential phase) in the rotational direction occurs between the first and second drive shafts 102a and 102b in response to a leg-power inputted to the crank shaft 101, a differential phase also occurs between the second drive shaft 102b and the slider 921. As a result, a position of the projecting cam 921a relative to the recessed cam groove 922 is changed from the relationship shown on the left side of Fig. 10(c) to the relationship shown on the right side of Fig. 10(c), so that the slider 921 is axially slid to the left side of the vehicular body and correspondingly the displacement detecting lever 152 is axially displaced to the left side of the vehicular body against the biasing force of the coil spring 923.

In this embodiment, an axial displacement of the displacement detecting lever 152 represents a leg-power inputted to the crank shaft 101. The leg-power thus detected as the axial displacement by the leg-power detecting mechanism is converted into an electric signal by a stroke sensor 150 (see Fig. 6), which will be described in detail later, and is transmitted to the control unit 8.

A stopper projection 921b is provided on an end surface of the first drive shaft 102a, and a stopper hole 922a to be fitted with the stopper projection 921b is provided in an end surface of the second drive shaft 102b for preventing occurrence of an excessive torsion between the drive shafts 102a and 102b. With this configuration, it is possible to effectively protect the miniaturized torsion bar 102c and hence to further miniaturize the torsion bar 102c.

In Figs. 5 and 6, the right side from the torsion bar 102c shows the state in which the projection cam 921a is just fitted in the recessed cam 922, that is, a torque by a leg-power does not occur (equivalent to the state shown on the left side of Fig. 10(c)), and the left side from the torsion bar 102c shows the state in which the slider 921 is moved to the left side of the vehicular body by the change in position of the projection cam 921a relative to the recessed cam 922, that is, a torque by the leg-power occurs (equivalent to the state shown on the right side of Fig. 10(c)).

The second idle shaft 103 is rotatably supported by the case 10 via bearings 185 and 186 at a position offset rearwardly, downwardly from the first idle shaft 102. A gear teeth portion 114 to be meshed with the second gear 102e of the second drive shaft 102b is formed on the outer periphery of the second idle shaft 103, and a resin gear 115 is screwed in an end portion of the second idle shaft 103.

The electric motor M is disposed at a position offset rearwardly, downwardly from the second idle shaft 103, and the rotational shaft 104 thereof is rotatably supported by the case 10 via bearings 187 and 188. In addition, the bearing 188 and a motor housing 10M are held only on the left case 10L (not held on the right case 10R). Accordingly, in the case of removing the right case 10R, it is not required to remove the electric motor M. This makes it possible to easily remove the right case 10R.

The motor housing 10M is fastened to the left case 10L via an O-ring 10S by means of a bolt 782. A stator rotor 131 including a motor coil 130 is fixed to the rotational shaft 104 of the motor M, and a magnet 132 is provided around the stator rotor 131. A gear teeth portion 116 to be meshed with the resin gear 115 of the second idle shaft 103 is fixed to one end of the rotational shaft 104. Accordingly, a gear noise between the gears 115 and 116 rotating at a high speed can be suppressed. Since the resin cover 10A is fastened to the left case 10L on the left sides of the gears 115 and 116 by means of a bolt 783, the noise reduction effect can be further enhanced.

A water-proof seal 10B is provided overall on a connection plane between the resin cover 10A and the left case 10L. To further enhance the water-proof, a water-proof rib 10C is provided along the outer periphery of the connection plane between the resin cover 10A and the left case 10L. Accordingly, the water-proof between the resin cover 10A and the left case 10L can be sufficiently ensured even if the resin cover 10 is deformed when the resin cover 10A is fastened to the left case 10L by the bolt 783.

Referring to Fig. 6, the output shaft 105 is located at a position offset rearwardly, upwardly from the first idle shaft 102, and is rotatably supported by the unit case 10 via bearings 191 and 192. A fourth gear 118 meshed with the first gear 102d of the second drive shaft 102b is provided on the output shaft 105, and the drive sprocket 13 is fixed to an end portion, exposed from the case 10, of the output shaft 105.

In a front space of the case 10, as shown in Figs. 3 to 5, a flat-plate shaped control unit 8 for controlling the motor-driven assist unit 1 is mounted at a position offset forwardly, downwardly from the crank shaft 101. The control unit 8 is configured such that a control board 82 is contained in a resin made dish-like case 81 with a gap therebetween and the board surface molded with an insulating resin 83. Various control circuits 820, a plurality of power transistors (FETs) 821a, a plurality of diodes 821b, and a rotation sensor 822 are mounted on the control board 82. The devices 821a and 821b, which cause heat generation upon operation thereof, are fixedly in area-contact with an aluminum made radiation plate 829. The radiation plate 829 is fixedly in area-contact with the right case 10R made from aluminum.

The control unit 8 is tilted downwardly from the front to rear of the vehicular body, with the component mounting plane of the control board 82 directed inwardly. The rotation sensor 822 is fixed in the vicinity of an end of the control board 82 in such a manner as to face to the gear teeth portion of the acceleration gear 111 of the crank shaft 101. Accordingly, the heat generated by the heat generating devices 821a and 821b is radiated to the right case 10R, and the rotation sensor 822 disposed in the vicinity of the left case 10L is not affected by the heat generated by the devices 821a and 821b.

In this way, according to this embodiment, since the rotation sensor 822 is provided on the control unit 8 and the control unit 8 is disposed such that the rotation sensor 822 is disposed in the vicinity of the rotor (large-diameter gear 111) rotated in synchronization with the crank shaft 101, it is possible to eliminate the need of additionally providing a space for the rotation sensor 822 and hence to make compact the whole of the motor-driven assist unit. Further, since a distance between the rotation sensor 822 and the control unit 8 can be reduced to zero, it is possible not only to eliminate the need of provision of a wiring cord therebetween but also to suppress the inclusion of noise in an output signal from the rotation sensor 822.

Since the control unit 8 is disposed at the position offset forwardly, downwardly from the crank shaft 101 in the posture in which the motor-driven assist unit 1 is mounted to the body frame 2, it is possible to enhance an effect of air-cooling the control unit 8 upon running of the bicycle, and hence to improve the cooling efficiency of the,.control unit 8.

According to this embodiment, since the control board 82 is tilted downwardly from the front to rear of the body frame 2 in the posture in which the motor-driven assist unit 1 is mounted to the body frame 2, the control board 82 can be contained in the motor-driven assist unit 1 by making effective use of the existing internal space without changing the appearance shape of the lower front portion of the motor-driven assist unit 1. In this case, by mounting the control board 82 in such a manner that the circuit component mounting plane thereof is directed inwardly, it is possible to facilitate the maintenance of the control board 82.

A positioning pin 811 extending in parallel to a bottom surface of the dish-like case 81 projects outwardly from the bottom surface of the dish-like case 81 at a position corresponding to a rotation sensor 822 mounting position of the control board 82, and a position hole 911 in which the position pin 811 is to be inserted is formed in a portion, facing to the positioning pin 811, of the case 10. Similarly, a positioning pin 812 extending in parallel to a side surface of the dish-like case 81 projects outwardly from the side surface of the dish-like case 81 (see Fig. 4), and a positioning hole 912 in which the position pin 812 is to be inserted is formed in a portion, facing to the positioning pin 812, of the case 10. Accordingly, two planes of the control unit 8 can be positioned to keep a clearance between the rotation sensor 822 and the large-diameter gear 111 at a specific value.

The control unit 8, that is, the dish-like case 81 is positioned relative to the case 10 such that when the positioning pins 811 and 812 first comes into contact with the entrances of the positioning holes 911 and 912, the rotation sensor 822 does not face to the large-diameter acceleration gear 111, and thereafter, when the pins 811 and 812 are started to be inserted in the holes 911 and 912, the relative positional relationship (facing relationship) between the gear teeth portion of the acceleration gear 111 and the rotation sensor 822 becomes a predetermined relationship. Accordingly, in the case of fixing the control unit 8 to the case 10, the acceleration gear 111 does not interfere with the rotation sensor 822 disposed close to the acceleration gear 111, so that it is possible to easily assemble the control unit 8 in the case 10.

As shown in Fig. 5, the control unit 8 is fixed to the case 10 by fastening both side portions of an end portion, opposed to the end portion on which the rotation sensor 822 and the positioning pin 811 are provided, of the dish-like case 81, to the case 10 by means of screws 831 (831a and 831b, see Fig. 4).

In this way, according to this embodiment, since the positioning pins 811 and 812 as the positioning means are provided on the control unit 8 and the control unit 8 is fixed at the specific position in the motor-driven assist unit 1 with its specific posture kept, it is possible to keep the relative positional relationship between the rotation sensor 822 and the rotor (acceleration gear 111) at the predetermined relation, and hence to ensure the accuracy of detection of the rotational speed of the rotor.

Further, according to this embodiment, since one side portion of the control unit 8 is engaged with the case 10 of the motor-driven assist unit 1 by the positioning means provided on the one side portion of the control unit 8 and the other side portion of the control unit 8 is fastened to the case 10 by the fastening means, it is possible to simplify the fastening structure and to reduce the number of parts.

As shown in Fig. 6, since a power supply terminal 752 is disposed on an end surface, on the output side, of the electric motor M, a power supply cord 751 is required to extend from the output side of the electric motor M to the control unit 8. With respect to the extension of the power supply cord 751, since the many gear trains are disposed on the output side of the electric motor M in the case 10, the power supply cord 751 may be desirable to extend along the inner end surface of the right case 10R rather than extend along the inner end surface of the left case 10L.

According to this embodiment, a second inner wall 754 is additionally provided in such a manner as to be in parallel to an inner wall 756, disposed adjacently to the motor housing 10M, of the left case 10L, to form a space (cord passage) 753 surrounded by the inner walls 754 and 756. The power supply cord 751 led from the end surface, on the output side, of the electric motor M extends to the inner end surface of the right case 10R through the cord passage 753, and further extends to the control unit 8 along the inner end surface of the right case 10R.

With this configuration, since the power supply cord 751 extends, in the unit case 10, from the inner end surface side of the left case 10L to the inner end surface of the right case 10R through the cord passage 753, the power supply cord 751 does not interfere with the gear trains and the other components.

Further, according to this embodiment, to restrict the power supply cord 751 on the inner end surface of the right case 10R, a clamper 755 is provided in such a manner as to cross between bearing bosses 749 and 748 erected on the inner end surface of the right case 10R for supporting the bearings 184 and 185. The power supply cord 751 is made to pass through a passage surrounded by the bosses 749 and 748 and the clamper 755, to be thus clamped. In this way, by providing the clamper 755 in such a manner that it crosses between the existing bosses 749 and 748, it is possible to certainly clamp the power supply cord 751 with a simple structure.

According to the motor-driven assist unit configured as described above, a leg-power as a man-power is inputted to the crank shaft 101 via the pedals 12 and the cranks 11, and is transmitted from the first drive shaft 102a to the second drive shaft 102b of the first idle shaft 102 via the acceleration gear 111. On the other hand, a rotational torque of the electric motor M is transmitted to the second drive shaft 102b via the gear 115, second idle shaft 103, gear teeth portion 114, and second gear 102e, and is synthesized with the leg-power on the second drive shaft 102b. The resultant power on the second drive shaft 102b is transmitted to the output shaft 105 via the first gear 102d and fourth gear 118, and is further transmitted to the rear wheel WR via the drive sprocket 13 and chain 6.

Here, as shown in Fig. 6, an approximately central portion of a displacement detecting lever 152 with its one end swingably supported by a pin 153 is engaged with the ball cup 924 of the first idle shaft 102, and a stroke detecting shaft 151 of the stroke sensor 150 fixed to the right case 10R is connected to the other end of the displacement detecting lever 152. Accordingly, when a differential phase occurs between the first and second drive shafts 102a and 102b of the first idle shaft 102 in response to a leg-power inputted to the crank shaft 101, the ball cup 924 is axially displaced in accordance with the differential phase. The displacement detecting lever 152 is swung by the axial displacement of the ball cup 924, and the swing motion of the lever 152 is transmitted to the stroke sensor 150. In this way, the leg-power inputted to the crank shaft 101 is detected by the stroke sensor 150.

The detected leg-power is converted into an electric signal, which is then supplied to the control unit 8. The control unit 8 determines a most suitable assist torque on the basis of a rotational speed of the crank shaft (acceleration gear 111) detected by the rotation sensor 822 and the above-described leg-power, and controls, by the power transistors 821a, a drive current to be supplied to the electric motor M at such a value as to allow the electric motor M to generate the above assist torque.

According to this embodiment, since the leg-power detecting mechanism for converting a leg-power inputted to the crank shaft 101 into a mechanical displacement is provided on the first idle shaft 102 adjacent to the crank shaft 101, it is possible to eliminate the need of provision of a space which is required if the leg-power detecting mechanism is provided independently from the first idle shaft 102, and hence to ensure a space required for disposing the control unit 8 in the case 10 of the motor-driven assist unit 1 without the enlargement of the case 10 of the motor-driven assist unit 1.

According to this embodiment, since the second drive shaft 102b is usually biased to the right case 10R side (bearing 184 side) by the spring 102s to be positioned, the axial position of the recessed cam groove 922 formed in the end surface of the first drive shaft 102a is also positioned relative to the right case 10R, and further, since the stroke sensor 150 is fixed to the boss provided on the right case 10R, it is accurately positioned relative to the right case 10R.

Here, as described above, according to this embodiment, a displacement of the first drive shaft 102a relative to the second drive shaft 102b is detected as a leg-power by the stroke sensor 150, and therefore, if a relative positional difference occurs between the second drive shaft 102b and the stroke sensor 150, it becomes impossible to accurately detect the leg-power. According to this embodiment, however, since the second drive shaft 102b and the stroke sensor 150 are positioned relative to the same member (right case 10R) as described above, the relative positional relationship between the second drive shaft 102b and the stroke sensor 150 can be usually kept constant, with a result that it is possible to accurately detect the leg-power.

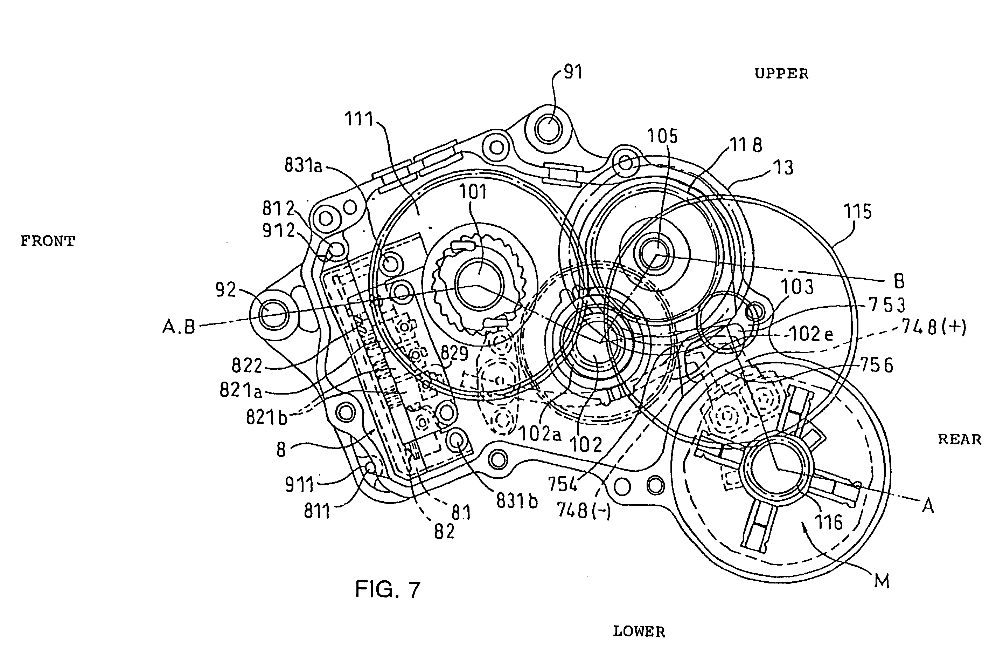

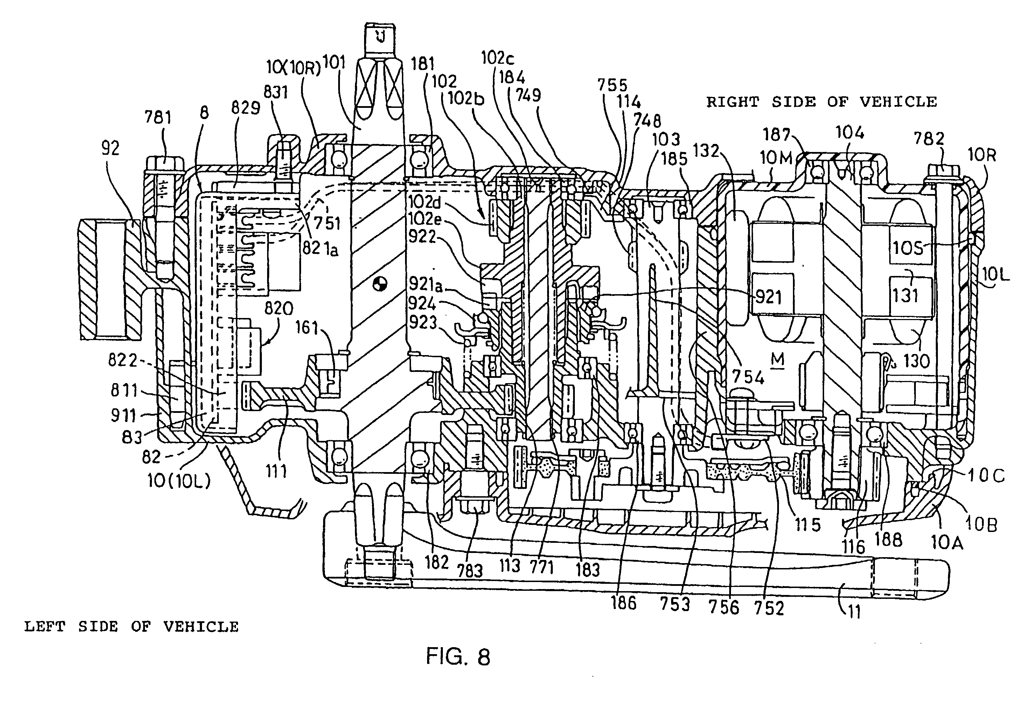

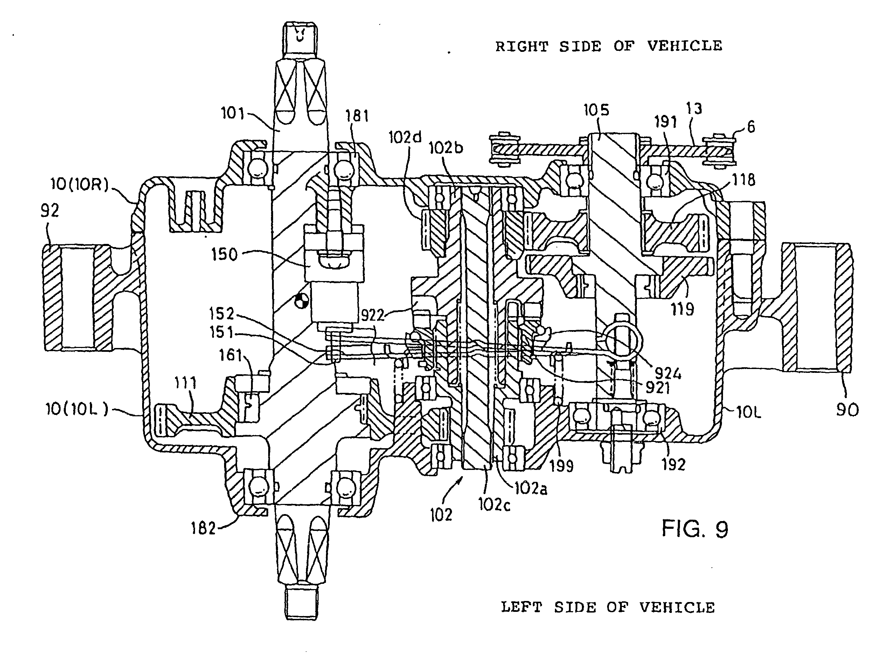

A second embodiment of the motor-driven assist unit 1 is shown in Figs. 7 to 9. In these figures, parts being the same as or similar to those described above are designated by the same characters.

According to the first embodiment, an assist-power generated by the drive motor M is transmitted to the first idle shaft 102 via the second idle shaft 103, being synthesized with a leg-power on the first idle shaft 102, and is transmitted to the output shaft 105; however, according to the second embodiment, an assist-power generated by a drive motor M is directly transmitted to an output shaft 105 via a second idle shaft 103.

To be more specific, an assist-power generated by a rotational shaft 104 of the drive motor M is transmitted to the second idle shaft 103 via a resin gear 115. A gear teeth portion 103a meshed with a gear 119 of the output shaft 105 is formed on the second idle shaft 103. The assist-power, having been transmitted to the second idle shaft 103, is transmitted to the output shaft 105 via the gear teeth portion 103a and the gear 119.

On the other hand, a leg-power inputted to a crank shaft 101 is transmitted to a first idle shaft 102 via an acceleration gear 111, the second idle shaft 103, and a gear teeth portion 113 of a first drive shaft 102a, and is further transmitted to the output shaft 105 via a gear teeth portion of a second drive shaft 102b and a fourth gear 118 of the output shaft 105. The leg-power is synthesized with the assist-power on the output shaft 105.

In this way, according to this embodiment, since an assist-power generated by the electric motor M is directly transmitted to the output shaft 105, it is possible to reduce the number of gears provided on the first idle shaft as compared with the above embodiment in which the first idle shaft is used as a synthesizing shaft. This is effective to increase the occupied space of a leg-power detecting mechanism on the first idle shaft and hence to increase the degree of freedom in design.

The invention provides a motor-driven assist unit capable of conforming the rotational direction of a crank shaft to that of an output shaft with an inexpensive structure and also of accurately detecting a leg-power inputted to the crank shaft.

A motor-driven assist unit contains an electric motor for generating an assist-power in response to a leg-power inputted to a crank shaft, wherein the assist-power and the leg-power are synthesized and a resultant power is transmitted to a drive wheel. The motor-driven assist unit is characterized by including a large-diameter gear 111 provided on a crank shaft 101; an output shaft 105 connected to the drive wheel; an idle shaft 102 disposed between the crank shaft 101 and the output shaft 105 in such a manner as to be in parallel thereto, the idle shaft 102 including a small-diameter gear 113 meshed with the large-diameter gear 111 of the crank shaft 101 and a second gear 102d meshed with the output shaft 105; and a leg-power detecting mechanism (102a, 102b, 102c, etc.), provided on the idle shaft 102, for detecting a leg-power inputted to the crank shaft 101.

## Claims

1. A motor-driven assist unit containing an electric motor (M) for generating an assist-power in response to a leg-power inputted to a crank shaft (101), wherein said assist-power and said leg-power are synthesized and a resultant power is transmitted to a drive wheel (WR), wherein
said motor-driven assist unit (1) comprises a large-diameter gear (111) provided on said crank shaft;
an idle shaft (102) including a small-diameter gear (113) and a second gear (102d) meshed with an output shaft (105);
in such a manner as to be in parallel to said output shaft (105), whereby said output shaft is connected to said drive wheel (WR);
said motor-driven assist unit further comprises to said output shaft (105), whereby said output shaft is **characterized in that** said motor-driven assist unit further comprises:
an idle shaft (102) disposed between said crank shaft (101) and said output shaft (105), said idle shaft being meshed with said large-diameter gear (111) of said crank shaft and
a leg-power detecting mechanism (102a,b,c...), provided on said idle shaft (102), for detecting a leg-power inputted to said crank shaft (101).

2. A motor-driven assist unit according to claim 1, wherein an assist-power generated by said electric motor (M) is transmitted to said idle shaft (102).

3. A motor-driven assist unit according to claim 1, wherein an assist-power generated by said electric motor (M) is transmitted to said output shaft (105).

4. A motor-driven assist unit according to any one of claims 1 to 3, wherein said idle shaft (102) is located behind said crank shaft (101) while being kept at a level nearly equal to that of said crank shaft (101) in a posture being mounted on a vehicle; said output shaft is located over said idle shaft (102) in a posture being mounted on the vehicle; and said motor (M) is located under said idle shaft (102) in a posture being mounted on the vehicle.

## Patentansprüche

1. Hilfsantriebseinheit, die einen Elektromotor (M) zum Erzeugen einer Hilfskraft in Reaktion auf eine an einer Kurbelwelle (101) eingegebene Beinkraft erzeugt, wobei die Hilfskraft und die Beinkraft zusammengeführt werden und eine resultierende Kraft auf ein Antriebsrad (WR) übertragen wird, wobei die Hilfsantriebseinheit (1) umfaßt:
ein Zahnrad (111) mit großem Durchmesser, das an der Kurbelwelle vorgesehen ist;
eine Leerlaufwelle (102), die ein Zahnrad (113) mit kleinem Durchmesser und ein zweites Zahnrad (102d), das mit einer Abtriebswelle (105) kämmt, enthält; derart, daß sie parallel zur Abtriebswelle (105) ist, wodurch die Abtriebswelle mit dem Antriebsrad (WR) verbunden ist;
**dadurch gekennzeichnet, daß** die Hilfsantriebseinheit ferner umfaßt:
eine Leerlaufwelle (102), die zwischen der Kurbelwelle (101) und der Abtriebswelle (105) angeordnet ist; und
einen Beinkrafterfassungsmechanismus (102a, b, c, ...), der auf der Leerlaufwelle (102) vorgesehen ist, um eine an der Kurbelwelle (101) eingegebene Beinkraft zu erfassen.

2. Hilfsantriebseinheit nach Anspruch 1, bei der eine vom Elektromotor (M) erzeugte Hilfskraft auf die Leerlaufwelle (102) übertragen wird.

3. Hilfsantriebseinheit nach Anspruch 1, bei der eine vom Elektromotor (M) erzeugte Hilfskraft auf die Abtriebswelle (105) übertragen wird.

4. Hilfsantriebseinheit nach irgendeinem der Ansprüche 1 bis 3, bei der die Leerlaufwelle (102) hinter der Kurbelwelle (101) angeordnet ist, während sie auf einem Niveau nahezu gleich demjenigen der Kurbeiwelle (101) in einer am Fahrzeug montierten Stellung gehalten wird; wobei die Abtriebswelle über der Leerlaufwelle (102) in einer am Fahrzeug montierten Stellung angeordnet ist; und wobei der Motor (M) unter der Leerlaufwelle (102) in einer am Fahrzeug montierten Stellung angeordnet ist.

## Revendications

1. Unité d'assistance entraînée par moteur contenant un moteur électrique (M) destiné à créer une énergie d'assistance en réponse à une énergie de jambe entrée sur un pédalier (101), dans laquelle ladite énergie d'assistance et ladite énergie de jambe sont synthétisées et une énergie résultante est transmise à une roue menante (WR), dans laquelle ladite unité d'assistance entraînée par moteur (1) comporte un engrenage de grand diamètre (111) agencé sur ledit pédalier ; un arbre de ralenti (102) comportant un engrenage de petit diamètre (113) et un second engrenage (102d) engrenant avec un arbre de sortie (105) ; de manière à être parallèle audit arbre de sortie (105), de sorte que ledit arbre de sortie est relié à ladite roue menante (WR) ; **caractérisée en ce que** ladite unité d'assistance entraînée par moteur comporte de plus :
un arbre de ralenti (102) disposé entre ledit pédalier (101) et ledit arbre de sortie (105), ledit arbre de ralenti engrenant avec ledit engrenage de grand diamètre (111) dudit pédalier, et
un mécanisme de détection d'énergie de jambe (102a, b, c, ...), agencé sur ledit arbre de ralenti (102) pour détecter une énergie de jambe entrée dans ledit pédalier (101).

2. Unité d'assistance entraînée par moteur selon la revendication 1, dans laquelle une énergie d'assistance produite par ledit moteur électrique (M) est transmise audit arbre de ralenti (102).

3. Unité d'assistance entraînée par moteur selon la revendication 1, dans laquelle une énergie d'assistance produite par ledit moteur électrique (M) est transmise audit arbre de sortie (105).

4. Unité d'assistance entraînée par moteur selon l'une quelconque des revendications 1 à 3, dans laquelle ledit arbre de ralenti (102) est situé derrière ledit pédalier (101) tout en étant maintenu à un niveau pratiquement égal à celui dudit pédalier (101) dans une position montée sur un véhicule ; ledit arbre de sortie est positionné au-dessus dudit arbre de ralenti (102) dans une position montée sur le véhicule ; et ledit moteur (M) est positionné en dessous dudit arbre de ralenti (102) dans une position montée sur le véhicule.
